Europäisches Patentamt

European Patent Office

Office européen des brevets

(11) Publication number: **0 245 038**
**B1**

(12) EUROPEAN PATENT SPECIFICATION

(45) Date of publication of patent specification: **30.01.91**

(21) Application number: **87303899.6**

(22) Date of filing: **30.04.87**

(51) Int. Cl.⁵: **H 04 N 9/64**

(54) Discriminating circuit for discriminating color television system.

(30) Priority: **01.05.86 JP 102433/86**
**01.05.86 JP 102435/86**

(43) Date of publication of application:
**11.11.87 Bulletin 87/46**

(45) Publication of the grant of the patent:
**30.01.91 Bulletin 91/05**

(84) Designated Contracting States:
**DE FR GB**

(56) References cited:
**DE-A-1 901 322**
**DE-A-3 137 269**

**PATENT ABSTRACTS OF JAPAN, vol. 4, no. 48
(E-6)(530), page 159; & JP-A-5520047**

(73) Proprietor: **VICTOR COMPANY OF JAPAN,
LIMITED
12, 3-chome, Moriya-Cho Kanagawa-ku
Yokohama-Shi Kanagawa-Ken 221 (JP)**

(72) Inventor: **Tomidokoro, Yutaka
No. 20-23, Mitsuzawashimo-Cho Kanagawa-Ku
Yokohama-Shi Kanagawa-Ken (JP)**

(74) Representative: **Robinson, John Stuart et al
MARKS & CLERK 57/60 Lincoln's Inn Fields
London WC2A 3LS (GB)**

Courier Press, Leamington Spa, England.

## EP 0 245 038 B1

**Description**

The present invention generally relates to discriminating circuits for discriminating color television systems, and more particularly to a discriminating circuit for discriminating whether an input color video signal is in conformance with a PAL (Phase Alternation by Line) system or a SECAM (Séquential à Mémoire) system.

As is well known, the color television system is not unified on a world wide basis, and different color television systems are employed depending on the countries and regions. However, in some regions, it is possible to receive in addition to a home broadcasted television signal a television signal broadcasted from a neighboring country. In other words, in some regions, it is possible to receive broadcasted television signals in conformance with two mutually different color television systems, such as the PAL system and the SECAM system.

When recording a broadcasted television signal on a video tape recorder (VTR) in such a region where the received television signal may be in conformance with either one of the two mutually different color television systems, it is necessary to first discriminate whether the received television signal is in conformance with the PAL system or the SECAM system. The discrimination is carried out so that a tuner, a video signal processing circuit and the like of the VTR may be switched over and controlled to perform operations most suited for the color television system of the received television signal. For this reason, a discriminating circuit for discriminating the color television system is provided in the VTR which is used in such a region so as to carry out the above described discrimination.

A conventional discriminating circuit for discriminating the color television system takes advantage of the fact that a color burst signal and a chrominance subcarrier frequency of a carrier chrominance signal of the PAL system color television signal are 4.433619 MHz (hereinafter simply referred to as 4.43 MHz) while chroma unmodulated chrominance subcarrier frequencies of the SECAM system color television signal are 4.40625 MHz (hereinafter simply referred to as 4.41 MHz) and 4.25 MHz, and the fact that the 4.41 MHz and 4.25 MHz chrominance subcarriers are repeated for every one horizontal scanning period (1H).

As will be described later on in the present specification in conjunction with drawings, the conventional discriminating circuit comprises a burst gate circuit, a bandpass filter, an envelope detector, a $f_H/2$ detector and a comparator. An input color video signal is supplied to the burst gate circuit which extracts the color burst signal or the chroma unmodulated chrominance subcarriers from the input color video signal responsive to a burst gate pulse signal having a period of 1H. The extracted signal is passed through the bandpass filter which has a passband with a center frequency of 4.16 MHz, so that 4.25 MHz will be passed but 4.41 MHz and 4.43 MHz will not be passed. When the input color video signal is in conformance with the PAL system, an output of the bandpass filter has an extremely small level. On the other hand, when the input color video signal is in conformance with the SECAM system, the output of the bandpass filter alternately has a large level at the 4.25 MHz unmodulated chrominance subcarrier and a small level at the 4.41 MHz unmodulated chrominance subcarrier.

The output of the bandpass filter is supplied to the envelope detector which detects the envelope thereof. An output signal of the envelope detector is supplied to the $f_H/2$ detector which detects a frequency component having a frequency $f_H/2$, where $f_H$ denotes a horizontal scanning frequency. No frequency component having the frequency $f_H/2$ is detected in the $f_H/2$ detector in the case of the PAL system input color video signal. But since the envelope detection signal of the 4.25 MHz unmodulated chrominance subcarrier having the large level is obtained with a period of 2H (that is, with a repetition frequency of $f_H/2$) in the case of the SECAM system input color video signal, the frequency component having the frequency $f_H/2$ is detected in the $f_H/2$ detector.

Hence, a detection output is obtained from the $f_H/2$ detector only in the case of the SECAM system input color video signal. The output of the $f_H/2$ detector is integrated and then compared with a refernce level in the comparator. As a result, a low-level discrimination signal is obtained from the comparator in the case of the PAL system input color video signal and a high-level discrimination signal is obtained from the comparator in the case of the SECAM system input color video signal, for example.

However, in the conventional discriminating circuit, the frequencies 4.25 MHz and 4.41 MHz are discriminated from each other by use of the bandpass filter or a filter which has a passband with a center frequency of 4.5 MHz and attenuates at 4.25 MHz. For this reason, the frequency discriminating accuracy of the bandpass filter and thus the color television system discriminating accuracy of the discriminating circuit are insufficient, and there is a problem in that an erroneous discrimination may be carried out by the discriminating circuit when the input color video signal has a poor signal-to-noise (S/N) ratio.

On the other hand, the $f_H/2$ detector of the conventional discriminating circuit comprises a tuned amplifier employing an LC resonant circuit having inductance and capacitance for amplifying only the frequency component having the fequency $f_H/2$. For this reason, it is necessary to adjust the inductance of the LC resonant circuit so as to match to the frequency $f_H/2$. In addition, there are problems in that the operation characteristic of the LC resonant circuit is temperature dependent and the operation stability of the $f_H/2$ detector is poor.

According to the invention, there is provided a discriminating circuit for discriminating whether an input color video signal is in conformance with a PAL system or a SECAM system, said discriminating circuit comprising gate means for gating a color burst signal having a period of one horizonatal scanning

2

EP 0 245 038 B1

period when the input color video signal is in conformance with the PAL system and for alternately gating chroma unmodulated chrominance subcarriers which are alternately transmitted for every one horizontal scanning period when the input color video signal is in conformance with the SECAM system, and a frequency demodulator for frequency-demodulating an output of said gate means as known from document DE—A—1901322, characterized in that said frequency demodulator has a demodulation center frequency which is in intermediate frequency between two subcarrier frequencies of the chroma unmodulated chrominance subcarriers which are alternately transmitted for every one horizontal scanning period when the input color video signal is in conformance with the SECAM system, and that said discriminating circuit is provided with: a clamping circuit for clamping peaks of a demodulated output of said frequency demodulator; shaping means for producing based on an output of said clamping circuit a first pulse train having a period of one horizontal scanning period and a constant polarity when the input color video signal is in conformance with the PAL system and a second pulse train having a polarity which is alternately inverted for every one horizontal scanning period when the input color video signal is in conformance with the SECAM system; and output means for outputting a discrimination signal indicative of whether the input color video signal is in conformance with the PAL or SECAM system basd on the level of the output pulse train of said shaping means.

It is thus possible to discriminate the color television system of the input color video signal with a high discrimination accuracy, even when the S/N ratio of the input color video signal is poor.

It is also possible to provide a discriminating circuit in which the output means comprises a first comparator for comparing the level of the output pulse train of the shaping means with a reference level and for outputting a signal which has a first level only when the level exceeds the reference level and otherwise has a second level, a $f_H/2$ detector for detecting whether or not the output signal of the first comparator has a frequency $f_H/2$, where $f_H$ denotes the horizontal scanning frequency, and a second comparator for integrating an output of the $f_H/2$ detector and for comparing the level thereof with another reference level so as to produce the discrimination signal.

It is further possible to provide a discriminating circuit in which the $f_H/2$ detector is constituted by a synchronous sequential logic circuit using flip-flops and gates. It is thus unnecessary to make adjustments to the $f_H/2$ detector so as to accurately detect the frequency $f_H/2$ because the frequency detection is carried out solely by the logic circuit. In addition, the operation of the $f_H/2$ detector is stable and unaffected by temperature changes and the like, and thus, the frequency detection is highly reliable. Therefore, the discrimination accuracy of the discriminating circuit is further improved.

The present invention will be further described, by way of example, with reference to the accompanying drawings, in which:

Figure 1 is a system block diagram showing an example of the conventional discriminating circuit for discriminating color television system;

Figure 2 shows a frequency versus response characteristic of a bandpass filter within the conventional discriminating circuit shown in Figure 1;

Figures 3 (A) and 3 (B) show signal waveforms for explaining the operation of the conventional discriminating circuit shown in Figure 1;

Figure 4 is a system block diagram showing an embodiment of the discriminating circuit for discriminating color television system according to the present invention;

Figure 5 shows an embodiment of an input frequency versus output voltage characteristic of a frequency demodulator within the discriminating circuit shown in Figure 4;

Figure 6 is a circuit diagram showing an embodiment of a peak clamping circuit within the discriminating circuit shown in Figure 4;

Figures 7 (A) through 7 (F) and Figures 8 (A) through 8 (F) show signal waveforms for explaining the operation of the discriminating circuit shown in Fig. 4;

Fig. 9 is a circuit diagram showing a first embodiment of the $f_H/2$ detector;

Figs. 10(A) through 10(E) and Figs. 11(A) through 11(E) show signal waveforms for explaining the operation of the $f_H/2$ detector shown in Fig. 9;

Fig. 12 shows an embodiment of the state transition diagram for the first embodiment of the $f_H/2$ detector;

Fig. 13 shows a primitive state transition diagram used in designing the $f_H/2$ detector within the discriminating circuit shown in Fig. 4;

Fig. 14 shows an embodiment of the state transition diagram for a second embodiment of the $f_H/2$ detector;

Fig. 15 is a circuit diagram showing the second embodiment of the $f_H/2$ detector;

Figs. 16(A) through 16(E) show signal waveforms for explaining the operation of the $f_H/2$ detector shown in Fig. 15;

Fig. 17 shows an embodiment of the state transition diagram for a third embodiment of the $f_H/2$ detector;

Fig. 18 is a circuit diagram showing the third embodiment of the $f_H/2$ detector; and

Figs. 19(A) through 19(E); show signal waveforms for explaining the operation of the $f_H/2$ detector shown in Fig. 18.

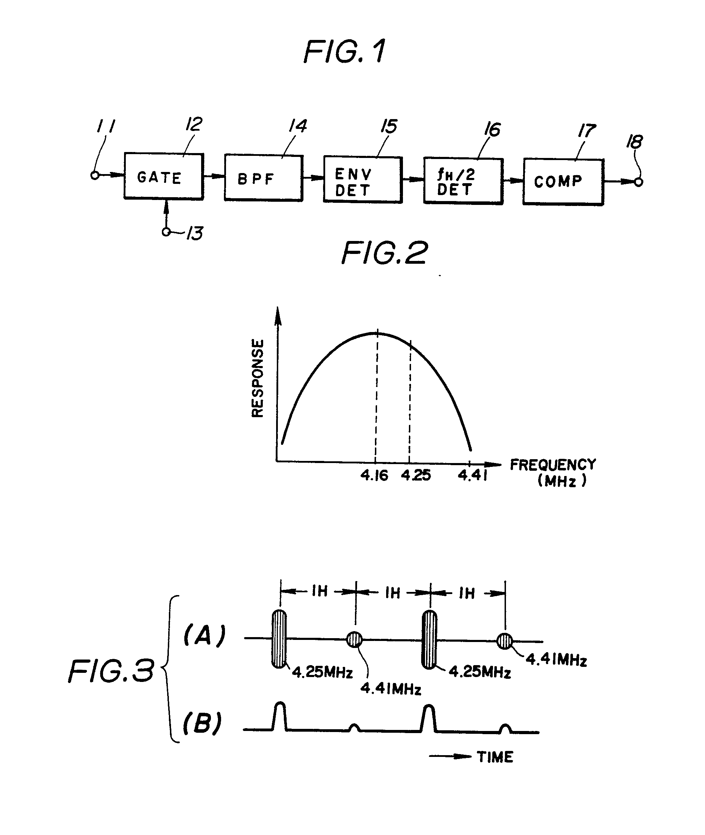

First, a description will be given on the conventional discriminating circuit for discriminating the color television system and problems thereof. Fig. 1 shows an example of the conventional discriminating circuit. The conventional discriminating circuit takes advantage of the fact that a color burst signal and a chrominance subcarrier frequency of a carrier chrominance signal of the PAL system color television signal are 4.433619 MHz (hereinafter simply referred to as 4.43 MHz) while chroma unmodulated chrominance subcarrier frequencies of the SECAM system color television signal are 4.40625 MHz (hereinafter simply referred to as 4.41 MHz) and 4.25 MHz, and the fact that the 4.41 MHz and 4.25 MHz chrominance subcarriers are repeated for every one horizontal scanning period (1H).

The conventional discriminating circuit comprises a burst gate circuit 12, a bandpass filter 14, an envelope detector 15, a $f_H/2$ detector 16 and a comparator 17. An input color video signal from an input terminal 11 is supplied to the burst gate circuit 12 which extracts the color burst signal or the chroma unmodulated chrominance subcarriers from the input color video signal responsive to a burst gate pulse from a terminal 13. This burst gate pulse signal has a period of 1H and is produced by known means. The extracted signal is passed through the bandpass filter 14 which has a passband with a center frequency of 4.16 MHz as shown in Fig. 2, so that 4.25 MHz will be passed but 4.41 MHz and 4.43 MHz will not be passed. When the input color video signal is in conformance with the PAL system, an output of the bandpass filter 14 has an extremely small level. On the other hand, when the input color video signal is in conformance with the SECAM system, the output of the bandpass filter 14 alternately has a large level at the 4.25 MHz unmodulated chrominance subcarrier and a small level at the 4.41 MHz unmodulated chrominance subcarrier as shown in Fig. 3(A).

The output of the bandpass filter 14 is supplied to the envelope detector 15 which detects the envelope thereof. An output signal of the envelope detector 15 is supplied to the $f_H/2$ detector 16 which detects a frequency component having a frequency $f_H/2$ (approximately 7.8 kHz), where $f_H$ denotes a horizontal scanning frequency. No frequency component having the frequency $f_H/2$ is detected in the $f_H/2$ detector 15 in the case of the PAL system input color video signal. But since the envelope detection signal of the 4.25 MHz unmodulated chrominance subcarrier having the large level is obtained with a period of 2H (that is, with a repetition frequency of $f_H/2$) in the case of the SECAM system input color video signal as shown in Fig. 3(B), the frequency component having the frequency $f_H/2$ is detected in the $f_H/2$ detector 16.

Hence, a detection output is obtained from the $f_H/2$ detector 16 only in the case of the SECAM system input color video signal. The output of the $f_H/2$ detector 16 is integrated and then compared with a reference level in the comparator 17. As a result, a low-level discrimination signal is obtained from an output terminal 18 in the case of the PAL system input color video signal and a high-level discrimination signal is obtained from the output terminal 18 in the case of the SECAM system input color video signal, for example.

However, in the conventional discriminating circuit, the frequencies 4.25 MHz and 4.41 MHz are discriminated from each other by use of the bandpass filter 14 or a filter which has a passband with a center frequency of 4.5 MHz and attenuates at 4.25 MHz. For this reason, the frequency discriminating accuracy of the bandpass filter 14 and thus the color television system discriminating accuracy of the discriminating circuit are insufficient, and there is a problem in that an erroneous discrimination may be carried out by the discriminating circuit when the input color video signal has a poor signal-to-noise (S/N) ratio.

Accordingly, the present invention eliminates the problems of the conventional discriminating circuit by frequency-demodulating the color burst signal or the chroma unmodulated chrominance subcarriers in a frequency demodulator having a demodulation center frequency set to an intermediate frequency between 4.25 MHz and 4.41 MHz, and obtains the discrimination signal by shaping a demodulated output of the frequency demodulator.

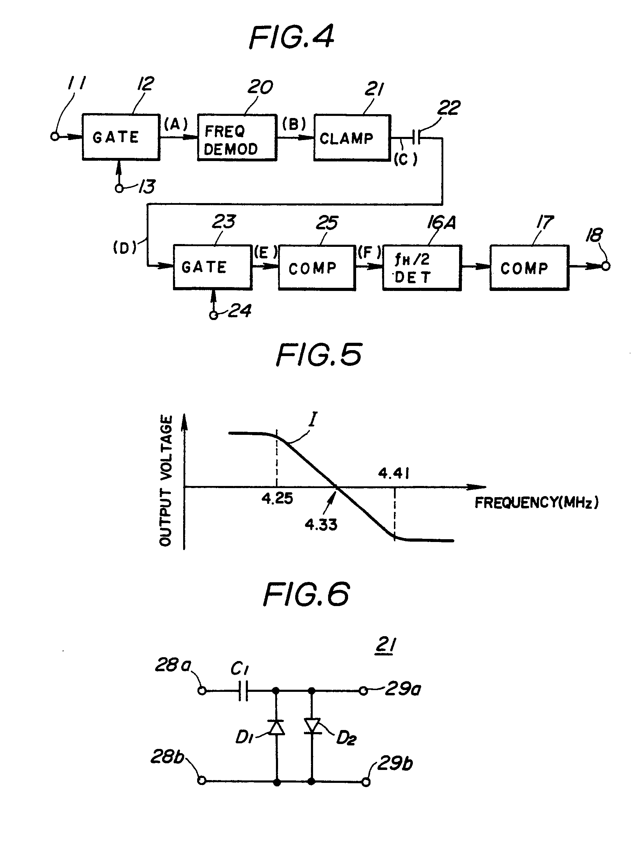

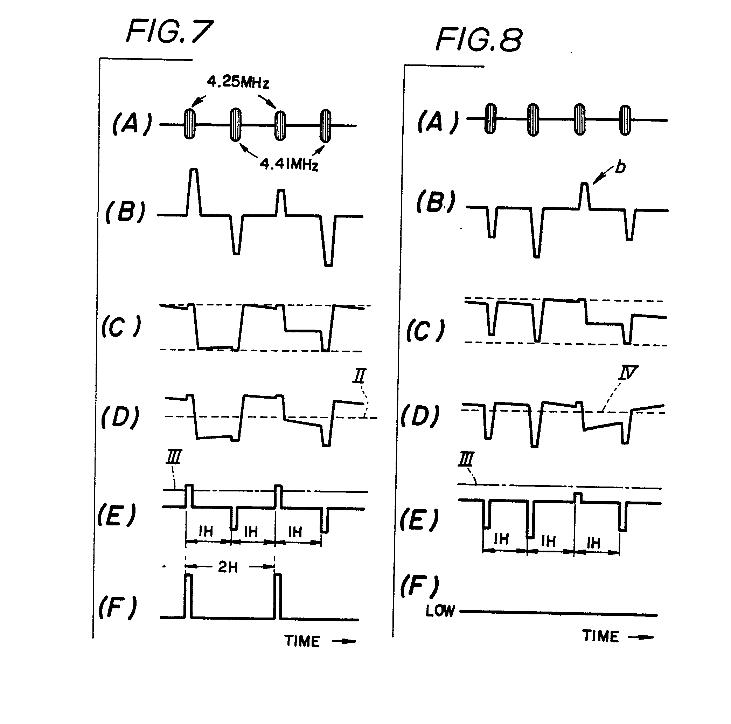

Fig. 4 shows an embodiment of the discriminating circuit according to the present invention. In Fig. 4, those parts which are the same as those corresponding parts in Fig. 1 are designated by the same reference numerals, and description thereof will be omitted. In the case where the input color video signal from the input terminal 11 is in conformance with the SECAM system, the 4.25 MHz chroma unmodulated chrominance subcarrier having a certain duration and the 4.41 MHz chroma unmodulated chrominance subcarrier having a certain duration are alternately obtained from the burst gate circuit 12 for every 1H as shown in Fig. 7(A). The output unmodulated chrominance subcarriers of the burst gate circuit 12 are supplied to a frequency demodulator 20.

The frequency demodulator 20 has an input frequency versus output voltage characteristic indicated by a solid line I in Fig. 5 in which a demodulation center frequency is selected to an intermediate frequency of 4.33 MHz between 4.25 MHz and 4.41 MHz. Accordingly, a demodulated signal shown in Fig. 7(B) is obtained from the frequency demodulator 20 by frequency-demodulating the chroma unmodulated chrominance subcarriers. As shown in Fig. 7(B), the demodulated signal has such a waveform that the 4.25 MHz chroma unmodulated chrominance subcarrier is converted into a positive polarity pulse and the 4.41 MHz chroma unmodulated chrominance subcarrier is converted into a negative polarity pulse.

The demodulated signal is supplied to a peak clamping circuit 21. An embodiment of the peak clamping circuit 21 is shown in Fig. 6. In Fig. 6, the peak clamping circuit 21 comprises a capacitor C1 and diodes D1 and D2. The capacitor C1 is coupled between an input terminal 28a and an output terminal 29a. The diodes D1 and D2 are coupled in parallel between the output terminal 29a and input and output terminals 28b and 29b. The diodes D1 and D2 are coupled so that anodes thereof are coupled to mutually different output terminals 29a and 29b. Hence, the peak clamping circuit 21 limits the amplitude of the demodulated signal by clamping both upper and lower peaks of the demodulated signal and produces a signal shown in Fig. 7(C).

The output signal of the peak clamping circuit 21 is passed through a D.C. blocking capacitor 22 for blocking a D.C. component thereof, and a signal shown in Fig. 7(D) is supplied to a gate circuit 23 from the D.C. blocking capacitor 22. As shown in Fig. 7(D), an average value II of the signal shown in Fig. 7(C), indicated by a phantom line, is positioned at a center level of the signal waveform. A gate pulse signal having a period of 1H is applied to a terminal 24, and the gate circuit 23 gates only signal portions corresponding to the incoming unmodulated chrominance subcarriers. As a result, a pulse train in which the polarity is alternately inverted for every 1H as shown in Fig. 7(E) is obtained from the gate circuit 23. The D.C. blocking capacitor 22 and the gate circuit 23 constitute a shaping circuit.

The output pulse train of the gate circuit 23 is supplied to a comparator 25 which comprises the level of the pulse train with a reference level (voltage) indicated by a one-dot chain line III in Fig. 7(E). The comparator 25 converts the pulse train into a signal which has a high level only when the reference level is exceeded and otherwise has a low level. Hence, a pulse train having a period of 2H as shown in Fig. 7(F) is obtained from the comparator 25. In order to prevent an erroneous operation of the discrimination circuit even when a noise is present, the output pulse train of the comparator 25 is supplied to a $f_H/2$ detector 16A which detects whether or not this pulse train has the period of 2H (that is, a repetition frequency of $f_H/2$). An output of the $f_H/2$ detector 16A is supplied to the comparator 17 wherein the output is integrated and compared with another reference level (voltage), and a high-level discrimination signal indicating that the input color video signal is in conformance with the SECAM system is obtained from the output terminal 18. The comparator 25, the $f_H/2$ detector 16A and the comparator 17 constitute an output circuit for outputting the discrimination signal.

Next, a description will be given for the case where the input color video signal is in conformance with the PAL system. In this case, the color burst signal having the constant chrominance subcarrier frequency of 4.43 MHz is obtained from the burst gate circuit 12 as shown in Fig. 8(A). Thus, as may be understood from the input frequency versus output voltage characteristic of the frequency demodulator 20 shown in Fig. 5, a negative polarity pulse signal shown in Fig. 8(B) is obtained from the frequency demodulator 20. In Fig. 8(B), a positive polarity pulse b is generated by a noise in the color burst signal. The pulse b is shown with an opposite polarity to that of the output pulse signal of the frequency demodulator 20 to show that the noise in the color burst signal may generate such a positive polarity pulse in the output pulse signal of the frequency demodulator 20.

As a result, a signal shown in Fig. 8(C) is obtained from the peak clamping circuit 21, and a signal shown in Fig. 8(D) is obtained from the D.C. blocking capacitor 22. As shown in Fig. 8(D), the signal waveform is shifted generally toward the lower potential with reference to an average value of the signal shown in Fig. 8(C) indicated by a phantom line IV.

As described before, the gate circuit 23 is designed to gate the incoming signal during time periods corresponding to the gating periods of the burst gate circuit 12. For this reason, a pulse train shown in Fig. 8(E) is obtained from the gate circuit 23. This pulse train should originally comprise pulses which have the same polarity (negative polarity in this case) and have a period of 1H. However, as described before, a pulse having an opposite polarity may be included in the pulse train due to the noise in the color burst signal. A similar phenomenon caused by the noise also occurs in the case of the input color video signal which is in conformance with the SECAM system.

The comparator 25 compares the level of the pulse train from the gate circuit 23 with the reference level (voltage) indicated by the one-dot chain line III in Fig. 8(E) which is identical to the reference level indicated by the one-dot chain line III in Fig. 7(E). As a result, a low-level signal shown in Fig. 8(F) is obtained from the comparator 25. Even when the pulse of the opposite polarity caused by the noise is included in the output pulse train of the gate circuit 23, this pulse of the opposite polarity has a small level which will not exceed the reference level III. Hence, the pulse of the opposite polarity will not appear in the output signal of the comparator 25.

The output low-level signal of the comparator 25 is passed through the $f_H/2$ detector 16A and the comparator 17, and a low-level discrimination signal indicating that the input color video signal is in conformance with the PAL system is obtained from the output terminal 18.

Accordingly, it can be seen that the discrimination of the color television signal can be carried out with a high accuracy even when the signal-to-noise (S/N) ratio of the input color video signal is poor.

On the other hand, the $f_H/2$ detector 16 of the conventional discriminating circuit shown in Fig. 1 comprises a tuned amplifier employing an LC resonant circuit having inductance and capacitance for amplifying only the frequency component having the frequency $f_H/2$.

For this reason, it is necessary to adjust the inductance of the LC resonant circuit so as to match to the frequency $f_H/2$. In addition, there are problems in that the operation characteristic of the LC resonant circuit is temperature dependent and the operation stability of the $f_H/2$ detector 16 is poor. Consequently, the discrimination accuracy of the embodiment described heretofore becomes dependent on the operation stability of the $f_H/2$ detector 16 when the $f_H/2$ detector 16 is used as the $f_H/2$ detector 16A.

Therefore, although the embodiment described heretofore enables accurate discrimination of the color television system compared to the conventional discriminating circuit, it is possible to further improve the discrimination accuracy when the problems of the $f_H/2$ detector 16 are eliminated.

Next, a description will be given on embodiments of the $f_H/2$ detector 16A constituted by a synchronous sequential logic circuit using flip-flops and gates.

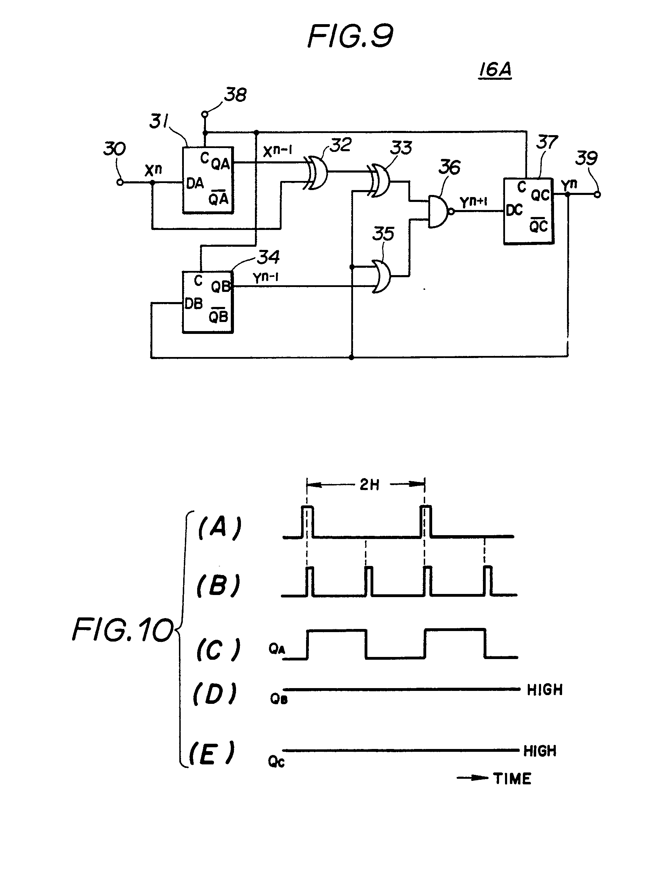

Fig. 9 shows a first embodiment of the $f_H/2$ detector 16A. In Fig. 9, a data input terminal $D_A$ of a clocked delay (D) flip-flop 31 and one input terminal of an exclusive-OR circuit 32 are coupled to an input terminal 30 which is applied with the output signal of the comparator 25 shown in Fig. 4. The other input terminal of the exclusive-OR circuit 32 is coupled to an output terminal $Q_A$ of the flip-flop 31, and an output terminal of the exclusive-OR circuit 32 is coupled to a data input terminal $D_C$ of a D flip-flop 37 via a 2-input exclusive-OR circuit 33 and a 2-input NAND circuit 36. A clock pulse signal having a period of 1H is applied to an input terminal 38 and is supplied to clock input terminals C of the D flip-flops 31, 34 and 37.

An output terminal $Q_C$ of the flip-flop 37 is coupled to a data input terminal $D_B$ of the flip-flop 34, one input terminal of the exclusive-OR circuit 33, and one input terminal of a 2-input OR circuit 35. The other input terminal of the OR circuit 35 is coupled to an output terminal $Q_B$ of the flip-flop 34, and an output terminal of the OR circuit 35 is coupled to the other input terminal of the NAND circuit 36. The output terminal $Q_C$ of the flip-flop 37 is coupled to an output terminal 39 from which a frequency detection signal is obtained.

The operation of the $f_H/2$ detector 16A shown in Fig. 9 may be described by the following logic equation, where $X^n$ denotes the input signal to the input terminal 30, $X^{n-1}$ denotes the input signal of 1H before, $Y^n$ denotes an output signal from the output terminal 39, $Y^{n-1}$ denotes the output signal of 1H before, and $\oplus$ denotes an exclusive-OR logic operation.

$$Y^{n+1} = \overline{\{ (X^{n-1} \oplus X^n) \oplus Y^n \} \cdot (Y^{n-1} + Y^n)}$$

In the above equation, the values of the signals are the values at the rising edge of the clock pulse signal, and it is assumed that the logic value is "1" for the high signal level and the logic value is "0" for the low signal level.

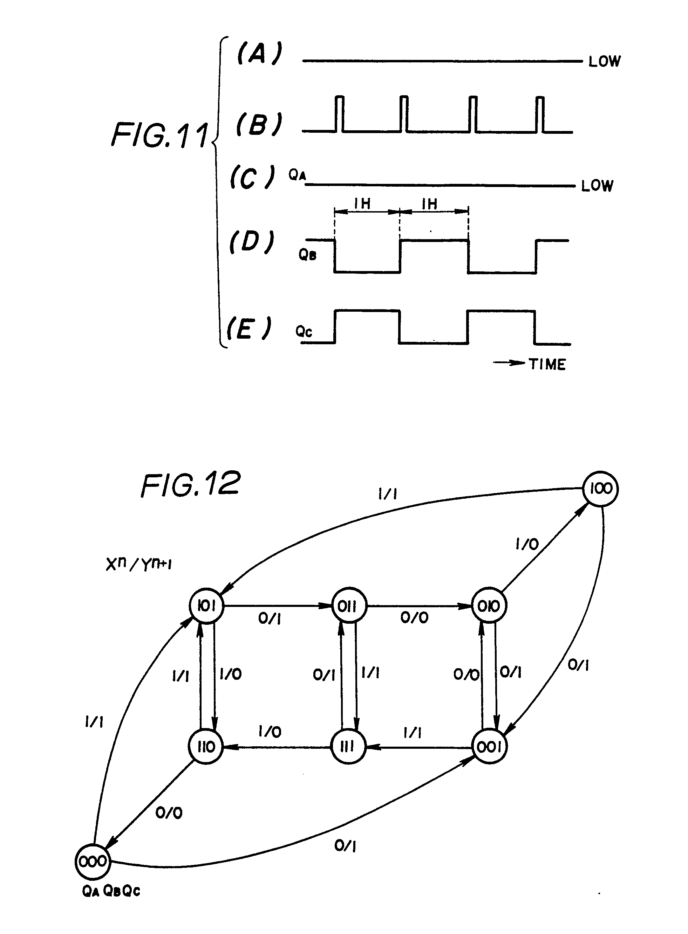

Next, a description will be given on the operation of the circuit shown in Fig. 9. In the case where the input color video signal is in conformance with the SECAM system, a signal shown in Fig. 10(A) which is identical to the signal shown in Fig. 7(F) is applied to the input terminal 30. On the other hand, a low-level signal shown in Fig. 11(A) which is identical to the signal shown in Fig. 8(F) is applied to the input terminal 30 when the input color video signal is in conformance with the PAL system.

A clock pulse signal shown in Figs. 10(B) and 11(B) having a period of 1H is applied to the input terminal 38. The flip-flop 31 samples the level of the input signal $X^n$ from the input terminal 30 at the rising edge of the clock pulse signal and produces from the output terminal $Q_A$ a signal shown in Fig. 10(C) as the signal $X^{n-1}$ responsive to the input signal $X^n$ shown in Fig. 10(A), and a low-level signal shown in Fig. 11(C) as the signal $X^{n-1}$ responsive to the input signal $X^n$ shown in Fig. 11(A).

An exclusive-OR logic $(X^{n-1} \oplus X^n)$ of the signal $X^{n-1}$ and the input signal $X^n$ is supplied to the exclusive-OR circuit 33 together with the output signal $Y^n$ from the output terminal $Q_C$. On the other hand, the flip-flop 34 samples the level of the output signal $Y^n$ at the rising edge of the clock pulse signal and produces a signal from the output terminal $Q_B$. This signal from the output terminal $Q_B$ is supplied to the OR circuit 35 as the signal $Y^{n-1}$ together with the output signal $Y^n$. The output signals of the exclusive-OR circuit 33 and the OR circuit 35 are supplied to the NAND circuit 36, and the signal $Y^{n+1}$ is obtained as a result of the NAND logic operation. The output signal $Y^{n+1}$ of the NAND circuit 36 is supplied to the data input terminal $D_C$ of the flip-flop 37. The flip-flop 37 samples the signal $Y^{n+1}$ at the rising edge of the clock pulse signal and produces the output signal $Y^n$ as the output detection signal of the $f_H/2$ detector 16A.

Accordingly, the signal $Y^{n-1}$ from the output terminal $Q_B$ of the flip-flop 34 has a high level as shown in Fig. 10 (D) and the output signal $Y^n$ from the output terminal $Q_C$ has a high level as shown in Fig. 10(E) responsive to the input signal $X^n$ shown in Fig. 10(A). On the other hand, the signal $Y^{n-1}$ from the output terminal $Q_B$ of the flip-flop 34 becomes as shown in Fig. 11(D) and the output signal $Y^n$ from the output terminal $Q_C$ becomes as shown in Fig. 11(E) responsive to the input signal $X^n$ shown in Fig. 11(A).

Fig. 12 shows the state transition diagram of the $f_H/2$ detector 16A shown in Fig. 9. In Fig. 12, the three numerals within each circle indicate the output level states of the signals obtained from respective output terminals $Q_A$, $Q_B$ and $Q_C$ of the flip-flops 31, 34 and 37. Each transition branch indicates the (input signal $X^n$)/ (output signal $Y^{n+1}$). In the case where the input color video signal is in conformance with the SECAM system and the signal shown in Fig. 10(A) is applied to the input terminal 30, the input sequence $\{X^n\}$ changes as . . . 1, 0, 1, 0, 1, 0, . . . for every rise in the clock pulse signal having the period of 1H. Hence, the state $(Q_A, Q_B, Q_C)$ alternately undergoes transition between (111) and (011). In this case, the output sequence $\{Y^n\}$ is . . . 1, 1, 1, 1, 1, 1, . . . . In the present specification, it is assumed that the values of the input and output sequences are taken at the rising edge of the clock pulse signal.

On the other hand, in the case where the input color video signal is in conformance with the PAL system and the signal shown in Fig. 11(A) is applied to the input terminal 30, the input sequence $\{X^n\}$ is . . . 0, 0, 0, 0, 0, 0, . . . for every rise in the clock pulse signal having the period of 1H. Hence, the state $(Q_A, Q_B, Q_C)$ alternately undergoes transition between (001) and (010). In this case, the output sequence $\{Y^n\}$ changes as . . . 1, 0, 1, 0, 1, 0, . . . .

The following Table shows examples of the input sequence $\{X^n\}$, the output sequence $\{Y^n\}$ and an output average which indicates the rate of the logic level "1".

## Table

| Period | Input Seq. $\{X^n\}$ | Output Seq. $\{Y^n\}$ | Output Av. |
|--------|----------------------|------------------------|------------|
| -- | ...00000000... | ...10101010... | 1/2 |
| 1H | ...11111111... | ...10101010... | 1/2 |
| 2H | ...10101010... | ...11111111... | 1 |
| 3H | ...11011011... | ...10010010... | 1/3 |
| 3H | ...10010010... | ...01001001... | 1/3 |
| 4H | ...11101110... | ...10111011... | 3/4 |
| 4H | ...11001100... | ...11001100... | 1/2 |
| 4H | ...10001000... | ...11011101... | 3/4 |

As may be seen from the Table, a high-level detection signal is produced from the $f_H/2$ detector 16A when the repetition frequency of the input signal applied to the input terminal 30 has a repetition frequency $f_H/2$ (that is, a period of 2H). On the other hand, a detection signal which has an output average value of $\frac{1}{2}$ (an intermediate level between the high and low levels) and has a period of 2H is produced from the $f_H/2$ detector 16A when the input signal applied to the input terminal 30 is constantly low ("0"). In other words, the high-level detection signal is produced when the SECAM system is detected and the detection signal having the output average value of $\frac{1}{2}$ is produced when the PAL system is detected.

Furthermore, as may be seen from the Table, the $f_H/2$ detector 16A produces an output detection signal which has an output average value of $\frac{1}{3}$ (that is, $\frac{1}{3}$ the level difference between the high and low levels) when the input signal applied to the input terminal 30 has a repetition frequency of $f_H/3$ (that is, a period of 3H). For this reason, it is possible to sufficiently suppress a signal component having the frequency $f_H/3$ which may be mixed into the input signal applied to the input terminal 30 in the case where the input color video signal is in conformance with the SECAM system. It may also be seen that the output detection signal of the $f_H/2$ detector 16A has an output average value of $\frac{3}{4}$ or $\frac{1}{2}$ when the input signal applied to the input terminal 30 has a repetition frequency of $f_H/4$ (that is, a period of 4H). In addition, the $f_H/2$ detector 16A produces an output detection signal which has an output average value of $\frac{1}{2}$ when the input signal applied to the input terminal 30 has a repetition frequency $f_H$ (that is, a period of 1H).

The output detection signal of the $f_H/2$ detector 16A can be passed through a lowpass filter (not shown) so as to obtain the output average value shown in the Table and then compare the output average value with the reference level in the comparator 17 shown in Fig. 4.

The circuit construction of the $f_H/2$ detector 16A for carrying out the logic operation in accordance with the logic equation described before is not limited to that shown in Fig. 9, and any circuit construction may be employed provided that the logic equation is satisfied.

For example, when designing a sequential logic circuit, a state transition diagram is made from various conditions the logic circuit is to satisfy. Then, a truth table is made from the state transition diagram, and a logic equation is obtained from the truth table. The logic circuit is designed from the logic equation. However, the state transition diagram and the logic equation may be derived with a certain degree of freedom, and thus, the circuit construction of the final logic circuit is not unique. For example, a state transition diagram may be derived from a primitive state transition diagram.

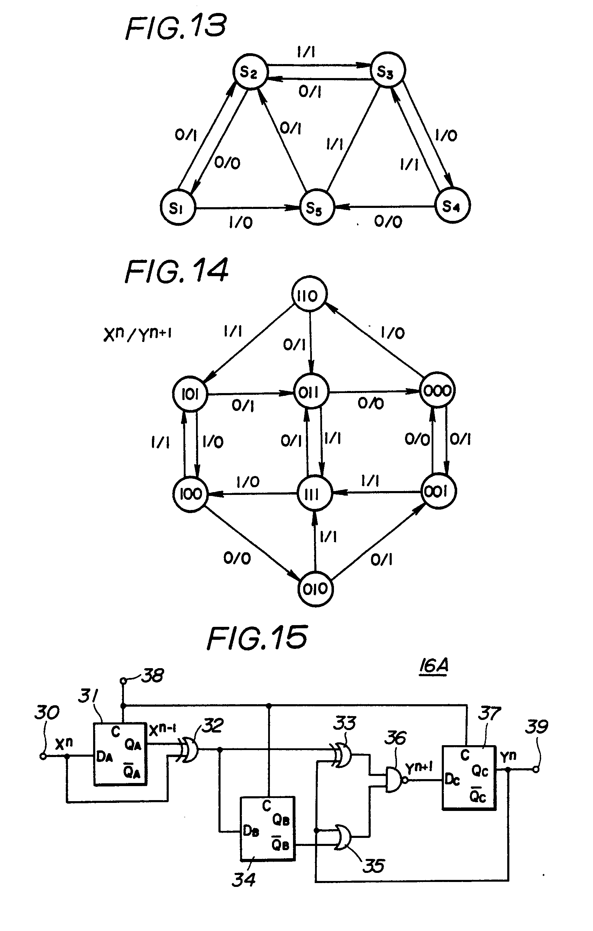

Fig. 13 shows a primitive state transition diagram for explaining how the $f_H/2$ detector 16A may be designed. In Fig. 13, states S1, S2, . . ., S5 respectively correspond to the states (000), (001), . . ., (100) of ($Q_A$, $Q_B$, $Q_C$) of the three D flip-flops of the sequential logic circuit. States S6, S7 and S8 respectively corresponding to the states (101), (110) and (111) may be added to the primitive state transition diagram shown in Fig. 13 in various ways. However, it is of course desirable that the state transition diagram derived from the primitive state transition diagram enables the designing of a sequential logic circuit having a simple circuit construction to carry out the desired logic operation. The state transition diagram shown in Fig. 12 described before enables the designing of the sequential logic circuit shown in Fig. 9 which has the simple circuit construction and carries out the desired logic operation in accordance with the logic equation described before.

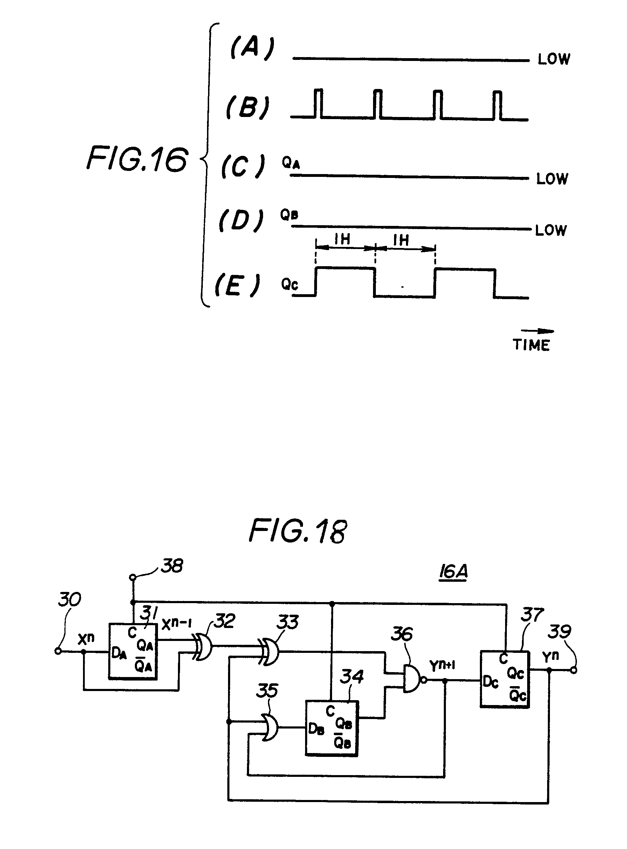

From the primitive state transition diagram shown in Fig. 13, a state transition diagram shown in Fig. 14 can be derived which also enables the designing of a second embodiment of the $f_H/2$ detector 16A shown in Fig. 15 which has a simple circuit construction to carry out the desired logic operation in accordance with the logic equation described before. In Fig. 15, the same designations are used as in Fig. 9. In this case, the signals shown in Figs. 10(C), 10(D) and 10(E) are respectively produced from the output terminals $Q_A$, $Q_B$ and $Q_C$ of the flip-flops 31, 34 and 37 for the input signal shown in Fig. 10(A). In addition, the signals shown in Figs. 16(C), 16(D) and 16(E) are respectively produced from the output terminals $Q_A$, $Q_B$ and $Q_C$ of the flip-flops 31, 34 and 37 for the input signal shown in Fig. 16(A). The input signal and the clock pulse signal shown in Figs. 16(A) and 16(B) are identical to those shown in Figs. 11(A) and 11(B), respectively. In this case, the signal from the output terminal $Q_A$ corresponds to the signal $X^{n-1}$, the signal from the output terminal $Q_B$ corresponds to the signal $X^{n-1} \oplus X^{n-1}$, and the signal from the output terminal $Q_C$ corresponds to the output signal $Y^n$.

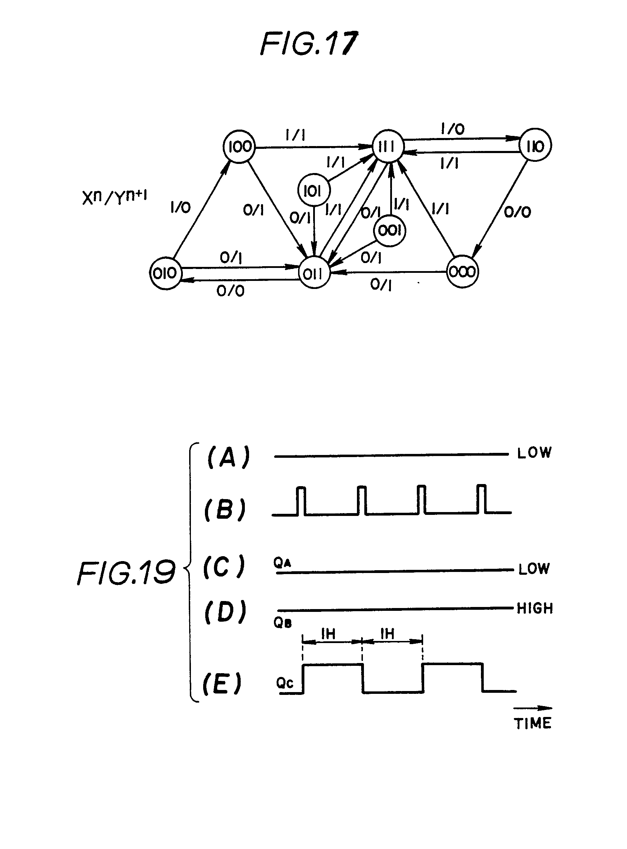

Similarly, a state transition diagram shown in Fig. 17 can be derived from the primitive state transition diagram shown in Fig. 13. The state transition diagram shown in Fig. 17 enables the designing of a third embodiment of the $f_H/2$ detector 16A shown in Fig. 18 which has a simple circuit construction to carry out the desired logic operation in accordance with the logic equation described before. In Fig. 18, the same designations are used as in Fig. 9. In this case, the signals shown in Figs. 10(C), 10(D) and 10(E) are respectively produced from the output terminals $Q_A$, $Q_B$ and $Q_C$ of the flip-flops 31, 34 and 37 for the input signal shown in Fig. 10(A). In addition, the signals shown in Figs. 19(C), 19(D) and 19(E) are respectively produced from the output terminals $Q_A$, $Q_B$ and $Q_C$ of the flip-flops 31, 34 and 37 for the input signal shown in Fig. 19(A). The input signal and the clock pulse signal shown in Figs. 19(A) and 19(B) are identical to those shown in Figs. 11(A) and 11(B), respectively. In this case, the signal from the output terminal $Q_A$ corresponds to the signal $X^{n-1}$, the signal from the output terminal $Q_B$ corresponds to the signal $Y^n + Y^{n-1}$, and the signal from the output terminal $Q_C$ corresponds to the output signal $Y^n$.

## Claims

1. A discriminating circuit for discriminating whether an input color video signal is in conformance with a PAL system or a SECAM system, said discriminating circuit comprising gate means (12) for gating a color burst signal having a period of one horizonatal scanning period when the input color video signal is in conformance with the PAL system and for alternately gating chroma unmodulated chrominance subcarriers which are alternately transmitted for every one horizontal scanning period when the input color video signal is in conformance with the SECAM system, and a frequency demodulator (20) for frequency-demodulating an output of said gate means (12), characterized in that said frequency demodulator (20) has a demodulation center frequency which is an intermediate frequency between two subcarrier frequencies of the chroma unmodulated chrominance subcarriers which are alternately transmitted for every one horizontal scanning period when the input color video signal is in conformance with the SECAM system, and that said discriminating circuit is provided with: a clamping circuit (21) for clamping peaks of a demodulated output of said frequency demodulator; shaping means (22, 23) for producing based on an output of said clamping circuit a first pulse train having a period of one horizontal scanning period and a constant polarity when the input color video signal is in conformance with the PAL system and a second pulse train having a polarity which is alternately inverted for every one horizontal scanning period when the input color video signal is in conformance with the SECAM system; and output means (25, 16A, 17) for outputting a discrimination signal indicative of whether the input color video signal is in conformance with the PAL or SECAM system basd on the level of the output pulse train of said shaping means.

2. A discriminating circuit as claimed in Claim 1, characterized in that said shaping means comprises a D.C. blocking capacitor for blocking a D.C. component of the output of said clamping circuit, and a gate circuit for gating an output of said D.C. blocking capacitor for every one horizontal scanning period so as to produce either the first or second pulse train.

3. A discriminating circuit as claimed in Claim 1, characterized in that said output circuit comprises a first comparator (25) for comparing a level of the output pulse train of said shaping means with a reference level, a frequency detector (16A) for detecting whether or not an output signal of said first comparator has a repetition frequency $f_H/2$ and for producing a detection signal when the output signal of said first comparator has a repetition frequency $f_H/2$, where $f_H$ denotes a horizontal scanning frequency, and a second comparator (17) for comparing a level of the detection signal with a reference level and for producing the discrimination signal, said discrimination signal having a first logic level when the inut color video signal is in conformance with the SECAM system and having a second logic level when the input color video signal is in conformance with the PAL system.

4. A discriminating circuit as claimed in Claim 3, characterized in that said frequency detector is constituted by a sequential logic circuit (16A) comprising flip-flops (31, 34, 37) and gates (32, 33, 35, 36) for carrying out a logic operation described by

$$Y^{n+1} = \overline{\{(X^{n-1} \oplus X^n) \oplus Y^n\} \cdot (Y^{n-1} + Y^n)}$$

where $X^n$ denotes the output signal of said first comparator, $X^{n-1}$ denotes the output signal of said first comparator of one horizontal scanning period before, $Y^n$ denotes the output detection signal of said frequency detector, $Y^{n-1}$ denotes the output detection signal of said frequency detector of one horizontal scanning period before and $\oplus$ denotes an exclusive-OR logic operation, said frequency detector producing a detection signal having an average level equal to the first logic level when the output signal of said first comparator has the repetition frequency $f_H/2$.

5. A discriminating circuit as claimed in Claim 4, characterized in that said frequency detector produces a detection signal having an average level which is $\frac{1}{2}$ a difference between the first and second logic levels when the output signal of said first comparator has a repetition frequency $f_H$, produces a detection signal having an average level which is $\frac{1}{3}$ said difference when the output signal of said first comparator has a repetition frequency $f_H/3$, and produces a detection signal having an average level which is $\frac{1}{2}$ or $\frac{3}{4}$ said difference when the output signal of said first comparator has a repetition frequency $f_H/4$.

6. A discriminating circuit as claimed in Claim 1, characterized in that said frequency demodulator has an input frequency versus output voltage characteristic in which a positive output voltage is produced for frequencies under said demodulation center frequency and a negative output voltage is produced for frequencies over said demodulation center frequency.

7. A discriminating circuit as claimed in Claim 1, characterized in that said clamping circuit comprises a capacitor (C1) and diodes (D1, D2) for clamping both positive and negative peaks of the demodulated output of said frequency demodulator.

**Patentansprüche**

1. Diskriminatorschaltung zur Unterscheidung, ob ein Farbvideoeingangssignal in Übereinstimmung mit einem PAL-System oder einem SECAM-System ist, welche Diskriminatorschaltung eine Toreinrichtung (12), die ein Farbburstsignal austastet, welches eine Periode von einer Horizontalabtastperiode aufweist, wenn das Farbvideoeingangssignal in Übereinstimmung mit dem PAL-System ist, und die alternierend chroma-unmodulierte Farbträger austastet, die alternierend für eine jede Horizontalabtastperiode übertragen werden, wenn das Farbvideoeingangssignal in Übereinstimmung mit dem SECAM-System ist, und einen Frequenzdemodulator (20) zur Frequenzdemodulation eines Ausgangssignals dieser Toreinrichtungtung (12) aufweist, dadurch gekennzeichnet, daß der Frequenzdemodulator (20) eine Demodulationsmittenfrequenz aufweist, die eine Zwischenfrequenz zwischen zwei Zwischenträgerfrequenzen der chroma-unmodulierten Farbträger ist, die alternierend für eine jede Horizontalabtastperiode übertragen werden, wenn das Farbvideoeingangssignal in Übereinstimmung mit dem SECAM-System ist, und daß die Diskriminatorschaltung versehen ist mit einer Clampschaltung (21) zum Klemmen von Spitzenwerten eines demodulierten Ausgangssignals des Frequenzdemodulators; einer Formereinrichtung (22, 23), die auf der Grundlage eines Ausgangssignals dieser Clampschaltung einen ersten Impulszug, der eine Periode von einer Horizontalabtastperiode und eine konstante Polarität aufweist, erzeugt, wenn das Farbvideoeingangssignal in Übereinstimmung mit dem PAL-System ist, und einen zweiten Impulszug erzeugt, dessen Polarität alternierend für eine jede Horizontalabtastperiode invertiert ist, wenn das Farbvideoeingangssignal in Übereinstimmung mit dem SECAM-System ist; und einer Ausgabeeinrichtung (25, 16A, 17), die ein Diskriminatorsignal, das anzeigt, ob das Farbvideoeingangssignal in Übereinstimmung mit dem PAL- oder SECAM-System ist, auf der Grundlage des Pegels des von der Formereinrichtung ausgegebenen Impulszuges ausgibt.

2. Diskriminatorschaltung nach Anspruch 1, dadurch gekennzeichnet, daß die Formereinrichtung einen Gleichspannungsblockierkondensator zum Blockieren einer Gleichspannungskomponente des Ausgangssignals der Clampschaltung und eine Torschaltung aufweist, die ein Ausgangssignal des Gleichspannungsblockierkondensators für eine jede Horizontalabtastperiode austastet, um so entweder den ersten oder zweiten Impulszug zu erzeugen.

3. Diskriminatorschaltung nach Anspruch 1, dadurch gekennzeichnet, daß die Ausgabeschaltung einen ersten Komparator (25) zum Vergleichen eines Pegels des von der Formereinrichtung ausgegebenen Impulszuges mit einem Bezugspegel, einen Frequenzdetektor (16A), der feststellt, ob ein Ausgangssignal des ersten Komparators eine Wiederholfrequenz $f_H/2$ aufweist oder nicht, und der ein Detektorsignal erzeugt, wenn das Ausgangssignal des ersten Komparators die Wiederholfrequenz $f_H/2$ aufweist, wobei $f_H$ eine Horizontalabtastfrequenz bezeichnet, und einen zweiten Komparator (17) aufweist, der einen Pegel des Detektorsignals mit einem Bezugspegel vergleicht und das Diskriminatorsignal erzeugt, wobei das Diskriminatorsignal einen ersten logischen Pegel aufweist, wenn das Farbvideoeingangssignal in Übereinstimmung mit dem SECAM-System ist, und einen zweiten logischen Pegel aufweist, wenn das Farbvideoeingangssignal in Übereinstimmung mit dem PAL-System ist.

4. Diskriminatorschaltung nach Anspruch 3, dadurch gekennzeichnet, daß der Frequenzdetektor von einer Sequentiallogikschaltung (16A) gebildet wird, die Flipflops (31, 34, 37) und Torglieder (32, 33, 35, 36) zum Ausführen einer logischen Operation aufweist, welche durch

$$Y^{n+1} = \overline{\{(X^{n-1} \oplus X^n) \oplus Y^n\} \cdot (Y^{n-1} + Y^n)}$$

beschrieben wird, wobei $X^n$ das Ausgangssignal des ersten Komparators bezeichnet, $X^{n-1}$ das Ausgangssignal des ersten Komparators von einer Horizontalabtastperiode zuvor bezeichnet, $Y^n$ das vom Frequenzdetektor ausgegebene Detektorsignal bezeichnet, $Y^{n-1}$ das vom Frequenzdetektor ausgegebene Detektorsignal von einer Horizontalabtastperiode zuvor bezeichnet und $\oplus$ eine logische Exklusiv-ODER-Verknüpfung bezeichnet, wobei der Frequenzdetektor ein Detektorsignal erzeugt, welches einen durchschnittlichen Pegel aufweist, der gleich dem ersten logischen Pegel ist, wenn das Ausgangssignal des ersten Komparators die Wiederholfrequenz $f_H/2$ aufweist.

5. Diskriminatorschaltung nach Anspruch 4, dadurch gekennzeichnet, daß der Frequenzdetektor ein Detektorsignal erzeugt, das einen durchschnittlichen Pegel aufweist, der $\frac{1}{2}$ einer Differenz zwischen dem ersten und zweiten logischen Pegel entspricht, wenn das Ausgangssignal des ersten Komparators eine Wiederholfrequenz $f_H$ aufweist, ein Detektorsignal erzeugt, das einen durchschnittlichen Pegel aufweist, der $\frac{1}{3}$ dieser Differenz entspricht, wenn das Ausgangssignal des ersten Komparators eine Wiederholfrequenz $f_H/3$ aufweist, und ein Detektorsignal erzeugt, welches einen durchschnittlichen Pegel aufweist, der $\frac{1}{2}$ oder $\frac{3}{4}$ dieser Differenz entspricht, wenn das Ausgangssignal des ersten Komparators eine Wiederholfrequenz $f_H/4$ aufweist.

6. Diskriminatorschaltung nach Anspruch 1, dadurch gekennzeichnet, daß der Frequenzdemodulator eine Kennlinie der Eingangsfrequenz als Funktion der Ausgangsspannung aufweist, in welcher Kennlinie eine positive Ausgangsspannung für Frequenzen unter dieser Demodulationsmittenfrequenz erzeugt wird und eine negative Ausgangsspannung für Frequenzen oberhalb dieser Demodulationsmittenfrequenz erzeugt wird.

7. Diskriminatorschaltung nach Anspruch 1, dadurch gekennzeichnet, daß die Clampschaltung einen Kondensator (C1) und Dioden (D1, D2) aufweist zum Klemmen beider Spitzenwerte, der positiven und negativen Spitzerwerte des demodulierten Ausgangssignals des Frequenzdemodulators.

**Revendications**

1. Un circuit discriminateur pour identifier si un signal vidéo couleur d'entrée est en conformité avec un système PAL ou un système SECAM, ledit circuit discriminateur comprenant des moyens à porte (12) pour déclencher un signal de salves de couleur ayant une période égale à une période de balayage horizontal quand le signal vidéo couleur d'entrée est en conformité avec le système PAL et pour déclencher autrement des sous-porteuses de chrominance non modulées en chroma qui sont transmises en alternance pour chaque période de balayage horizontal lorsque le signal vidéo couleur d'entrée est en conformité avec le système SECAM et un démodulateur de fréquence (20) pour démoduler en fréquence une sortie dudit moyen à porte (12), caractérisé en ce que ledit démodulateur de fréquence (20) présente une fréquence centrale de démodulation qui est une fréquence intermédiaire entre deux fréquences de sous-porteuse des sous-porteuses de chrominance non modulées en chroma qui sont transmises en alternance pour chaque période de balayage horizontal lorsque le signal vidéo couleur d'entrée est en conformité avec le système SECAM, et en ce que ledit circuit discriminateur présente: un circuit de bridage (21) pour brider des crêtes d'un sortie démodulée dudit démodulateur de fréquence; un moyen de mise en forme (22, 23) pour produire en fonction d'une sortie dudit circuit de bridage, un premier train d'impulsions ayant une période égale à une période de balayage horizontal et une polarité constante quand le signal vidéo couleur d'entrée est en conformité avec le système PAL et un second train d'impulsions ayant une polarité qui est inversée alternativement pour chaque période de balayage horizontal quand le signal vidéo couleur d'entrée est en conformité avec le système SECAM; et un moyen de sortie (25, 16A, 17) pour délivrer un signal de discrimination indiquant si le signal vidéo couleur d'entrée est en conformité avec le système PAL ou le système SECAM en fonction du niveau du train des impulsions de sortie dudit moyen de mise en forme.

2. Un circuit discriminateur comme revendiqué à la revendication 1, caractérisé en ce que ledit moyen de mise en forme comprend un condensateur de blocage de courant continu pour bloquer une composante de courant continu de la sortie dudit circuit de bridage, et un circuit à porte pour déclencher une sortie dudit condensateur de blocage de courant continu pour chaque période de balayage horizontal afin de produire soit le premier, soit le second train d'impulsions.

3. Un circuit discriminateur comme revendiqué à la revendication 1, caractérisé en ce que ledit circuit de sortie comprend un premier comparateur (25), pour comparer un niveau du train d'impulsions de sortie dudit moyen de mise en forme avec un niveau de référence, un détecteur de fréquence (16A) pour détecter si oui ou non un signal de sortie dudit premier comparateur a une fréquence de répétition de $f_H/2$ et pour former un signal de détection quand le signal de sortie dudit premier comparateur a la fréquence de répetition de $f_H/2$, où $f_H$ désigne une fréquence de balayage horizontal, et un second comparateur (17) pour comparer un niveau du signal de détection avec un niveau de référence et pour produire le signal de discrimination, ledit signal de discrimination ayant un premier niveau logique quand le signal vidéo couleur d'entrée est en conformité avec le système SECAM et ayant un second niveau logique quand le signal vidéo couleur d'entrée est en conformité avec le système PAL.

4. Un circuit discriminateur comme revendiqué à la revendication 3, caractérisé en ce que ledit détecteur de fréquence est constitué par un circuit logique séquentiel (16A) comprenant des bascules (31, 34, 37) et des portes (32, 33, 35, 36) pour effectuer une opération logique définie par:

$$Y^{n+1} = \overline{\{(X^{n-1} \oplus X^n) \oplus Y^n\} \cdot (Y^{n-1} + Y^n)}$$

ou $X^n$ désigne le signal de sortie dudit premier comparateur, $X^{n-1}$ désigne le signal de sortie dudit premier comparateur d'une période de balayage horizontal avant, $Y^n$ désigne le signal de sortie de détection dudit détecteur de fréquences, $Y^{n-1}$ désigne le signal de sortie de détection dudit détecteur de fréquence d'une période de balayage horizontal avant et $\oplus$ désigne une opération logique OU-exclusif, ledit détecteur de fréquence produisant un signal de détection ayant un niveau moyen égal au premier niveau logique quand le signal de sortie dudit premier comparateur a la fréquence de répétition de $f_H/2$.

5. Un circuit discriminateur comme revendiqué à la revendication 4, caractérisé en ce que ledit détecteur de fréquence produit un signal de détection ayant un niveau moyen qui est la moitié de la différence entre le premier et le second niveaux logiques quand le signal de sortie dudit premier comparateur a une fréquence de répétition de $f_H$, produit un signal de détection ayant un niveau moyen qui est le tiers de ladite différence quand le signal de sortie dudit premier comparateur a une fréquence de répetition de $f_H/3$, et produit un signal de détection ayant un niveau moyen qui est $\frac{1}{2}$ ou $\frac{3}{4}$ de ladite différence quand le signal de sortie dudit premier comparateur à une fréquence de répétition de $f_H/4$.

6. Un circuit discriminateur comme revendiqué à la revendication 1, caractérisé en ce que ledit démodulateur de fréquence a une caractéristique de fréquence d'entrée en fonction de la tension de sortie dans laquelle une tension de sortie positive est produite pour des fréquences inférieures à ladite fréquence centrale de démodulation et une tension de sortie négative est produite pour des fréquences supérieures à ladite fréquence centrale de démodulation.

7. Un circuit discriminateur comme revendiqué à la revendication 1, caractérisé en ce que ledit circuit de bridage comprend un condensateur (C1) et des diodes (D1, D2) pour brider à la fois les crêtes positives et négatives de la sortie démodulée dudit démodulateur de fréquence.

## FIG.1

## FIG.2

## FIG.3

## FIG.4

## FIG.5

## FIG.6

FIG.7

(A) 4.25MHz 4.41MHz

(B)

(C)

(D) II

III

(E) IH IH IH

2H

(F)

TIME →

FIG.8

(A)

(B) b

(C)

(D) IV

III

(E) IH IH IH

(F) LOW

TIME →

## FIG.9

## FIG.10

FIG.11

(A) ———————— LOW

(B)

(C) QA ———————— LOW

(D) QB

(E) QC

→ TIME

FIG.12

Xn / Yn+1

QA QBQC

## FIG.13

## FIG.14

$X^n / Y^{n+1}$

## FIG.15

FIG.16 {

(A) ———————————————— LOW

(B)

(C) Q_A ———————————————— LOW

(D) Q_B ———————————————— LOW

|← IH →|← IH →|

(E) Q_C

→
TIME

FIG.18

38

30    31  Xn-1  32    33         16A    37  39

Xn   C                              C
     D_A  Q_A                36     D_C  Q_C   Yn
          Q̄_A      Yn+1            Q̄_C

              35    34
                   C
              D_B  Q_B
                   Q̄_B

# FIG.17

# FIG.19

(A) ——————————— LOW

(B)

(C) QA ——————————— LOW

(D) QB ——————————— HIGH

(E) QC

TIME